# EUROPEAN PATENT APPLICATION

(11) **EP 4 813 495 A1**
(43) Date of publication of application: **30.09.2026**
(21) Application number: 25905662.0
(22) Date of filing: 26.12.2025
(51) Int. Cl.: B01D 36/02, C02F 1/00, C02F 1/28, E04H 4/16, C02F 103/42

(54) **FILTER APPARATUS FOR UNDERWATER ROBOT, AND UNDERWATER ROBOT**

(30) Priority: 24.01.2025 CN 202520172785 U
(71) Applicant: Yituo Electric Co., Ltd., Foshan, Guangdong 528305 (CN)
(72) Inventor: WANG, Yongjie, Foshan, Guangdong 528305 (CN); WU, Canglang, Foshan, Guangdong 528305 (CN); ZHENG, Chengdong, Foshan, Guangdong 528305 (CN)
(74) Representative: Patent 42
(86) International application number: PCT/CN2025/145871
(87) International publication number: WO 2026/157770

(57) **Abstract**

Disclosed are a filtering device for an underwater robot and an underwater robot. The filtering device includes a filtering device body, wherein a bottom of the filtering device body is provided with a water inlet; a side portion of the filtering device body is provided with a plurality of filter holes; a hollow cavity is defined in the filtering device body; the side portion of the filtering device body is made up of at least three interconnected side walls arranged to surround the filtering device body; at least one of the side walls is a contoured side wall; the contoured side wall is configured to define a second filter chamber toward the hollow cavity of the filtering device body or toward an outer side of the filtering device body; a first side wall of the filtering device body is connected to a left side of the contoured side wall, and a second side wall of the filtering device body is connected to a right side of the contoured side wall. The filtering device for an underwater robot and the underwater robot have a simple structure, are easy to use, are capable of collecting different types of debris, and a filtering effect thereof is further improved through a multi-layered filtering structure.

## Description

### TECHNICAL FIELD

The present disclosure relates to the technical field of smart cleaning equipment, in particular to the field of swimming pool cleaning technology, and more specifically to a filtering device for an underwater robot and an underwater robot.

### BACKGROUND

Against the backdrop of current technological innovation and the flourishing development of high-end manufacturing, the robotics industry has undoubtedly become a global focus of attention. A number of major economies regard the robotics industry as a national strategy and are committed to maintaining and enhancing their competitive advantages in manufacturing through the development of this field. Particularly in the field of smart home technology, the application of robots has deeply permeated daily life, with various types of robots gradually replacing manual labor to perform a variety of complex household tasks.

In the specific technical field of swimming pool cleaning technology, the underwater robot, as a specialized swimming pool cleaning device, has become increasingly important. The underwater robot is specifically designed for cleaning private or public swimming pools, not only significantly saving labor costs, but also achieving a more thorough and efficient cleaning effect compared to traditional manual cleaning methods. As people's water quality demands for swimming pools increase, there is a constant focus on changes in water quality, and the demand for cleaning fine particulate matter, suspended solids, flocculent matter, and the like in swimming pools is also increasing.

In conventional underwater robots for swimming pools, the working principle is to draw wastewater from the swimming pool into the device, filter it through a filtering device disposed in the robot body, and then discharge the filtered water from a water outlet, while debris remains trapped in the filtering device. However, in current underwater robots, the filter holes of the filtering device are generally relatively large. Although coarse debris such as leaves and small stones can be collected, fine particulate matter and flocculent matter cannot be collected because if the filter mesh is made too fine, the flocculent matter remaining directly on the filter mesh would likely cause clogging.

Therefore, some machines on the market are equipped with two or more filter chambers, with different chambers being provided with filter meshes having different pore sizes. Although this can achieve different filtering effects in different chambers, since the two chambers are in fluid communication with each other, the filtering effect is not ideal. Moreover, connecting two or more chambers to each other results in a complex structure, which brings inconvenience to subsequent cleaning and maintenance.

Accordingly, there is a need in the industry for an underwater robot that achieves both good filtering effect and convenient cleaning, and the present disclosure is intended to address this technical problem.

### SUMMARY

The present disclosure aims to overcome the above-mentioned deficiencies of the prior art and provides a filtering device for an underwater robot and an underwater robot to solve the problems of conventional swimming pool robots, such as incomplete filtration, complex structure, and difficulty in cleaning.

The present disclosure adopts the following technical solution. A filtering device for an underwater robot is provided. The filtering device includes a filtering device body, wherein a bottom of the filtering device body is provided with a water inlet, a side portion of the filtering device body is provided with a plurality of filter holes, a hollow cavity is defined in the filtering device body, the side portion of the filtering device body is made up of at least three interconnected side walls arranged to surround the filtering device body, at least one of the side walls is a contoured side wall, and the contoured side wall is configured to define a second filter chamber toward the hollow cavity of the filtering device body or toward an outer side of the filtering device body, a first side wall of the filtering device body is connected to a left side of the contoured side wall, and a second side wall of the filtering device body is connected to a right side of the contoured side wall.

The contoured side wall has an inner surface formed with uneven contours on the side portion. After water flows therethrough, different types of debris are carried to different regions for retention and collection, thereby achieving a classifying collection effect.

Further, the contoured side wall includes a first side lug through which the first side wall is connected to the left side of the contoured side wall, a second side lug through which the second side wall is connected to the right side of the contoured side wall, and a filtering wall disposed between the first side lug and the second side lug, and each of the filtering wall, the first side lug, and the second side lug is provided with a filter opening.

The first side lug and the second side lug are arranged to be inclined inwardly toward the filtering device body or outwardly away from the filtering device body, such that different vertical regions are present on the side surfaces thereof. The distance of water flow, the contact area, and other factors all affect the flow velocity of the water, so that debris is carried to different regions for retention.

Further, the filtering wall, the first side lug, and the second side lug are interconnected to form a U-shaped structure having an upper width greater than a lower width or a lower width greater than an upper width, or the filtering wall, the first side lug, and the second side lug are interconnected to form a wedge shape.

Further, a projection of the filtering wall is parallel to an edge of the water inlet. The parallel arrangement allows water entering through the water inlet to reach all regions smoothly without being obstructed midway.

Further, a first connecting wall is further provided between the first side wall and the first side lug, and a second connecting wall is further provided between the second side wall and the second side lug.

Further, the filter openings or the filter holes are provided with a filter substance, and the filter substance is one or combination of a filter mesh, a filter cotton, a filter paper, a filter bag, an activated carbon filter layer, and a particle filter layer. When multiple types are combined, they are stacked together.

An underwater robot is provided. The underwater robot includes an underwater robot body, wherein a bottom of the underwater robot body is provided with a debris inlet, and a side portion or an upper portion of the underwater robot body is provided with a water outlet;
a walking mechanism is disposed at a lower portion of the underwater robot, and the walking mechanism is walking wheels or walking tracks; and
the filtering device for an underwater robot is disposed inside the underwater robot body and on a water flow passage between the debris inlet and the water outlet, and the debris inlet is in communication with the water inlet.

Further, the underwater robot body is further provided with a second filtering device, and the second filtering device is disposed between the filtering device for an underwater robot and the water outlet.

Further, the second filtering device is provided with a suction wall, the suction wall has a contour corresponding to the contoured side wall of the filtering device body, and the suction wall and the contoured side wall are arranged to fit with each other.

Further, the second filtering device is provided with a second filter substance, and the second filter substance is one or combination of a filter mesh, a filter cotton, a filter paper, a filter bag, an activated carbon filter layer, and a particle filter layer. When multiple types are combined, they are stacked together.

Compared with the prior art, the present disclosure provides the following beneficial effects.

The present disclosure provides a filtering device for an underwater robot and an underwater robot, which have a simple structure, are easy to use, are capable of collecting different types of debris, and a filtering effect thereof is further improved through a multi-layered filtering structure.

### BRIEF DESCRIPTION OF THE DRAWINGS

Fig. 1 is a first structural schematic diagram of a filtering device for an underwater robot according to Embodiment 1 of the present disclosure.
Fig. 2 is a second structural schematic diagram of the filtering device for an underwater robot according to Embodiment 1 of the present disclosure.
Fig. 3 is a structural schematic diagram of the filtering device for an underwater robot according to Embodiment 1 of the present disclosure, illustrating an arrangement in which one of the side walls is a contoured side wall.
Fig. 4 is a structural schematic diagram of the filtering device for an underwater robot disposed in the underwater robot according to Embodiment 1 of the present disclosure.
Fig. 5 is an exploded structural schematic diagram of the filtering device for an underwater robot disposed in the underwater robot according to Embodiment 1 of the present disclosure.

Reference numerals in the drawings:
filtering device 100, water inlet 101, second filter chamber 102;
first side wall 110, second side wall 111, first side lug 112, second side lug 113, filtering wall 114, first connecting wall 115, second connecting wall 116;
underwater robot 120, walking wheel 121, walking track 122, water outlet 123, second filtering device 124.

### DETAILED DESCRIPTION OF THE EMBODIMENTS

The drawings of the present disclosure are merely for illustrative purposes and shall not be construed as limiting the present disclosure. In order to better illustrate the following embodiments, certain components in the drawings are omitted, enlarged, or scaled down, and do not represent the dimensions of an actual product. For those skilled in the art, it is understandable that certain known structures and descriptions thereof in the drawings may be omitted.

### Embodiment 1

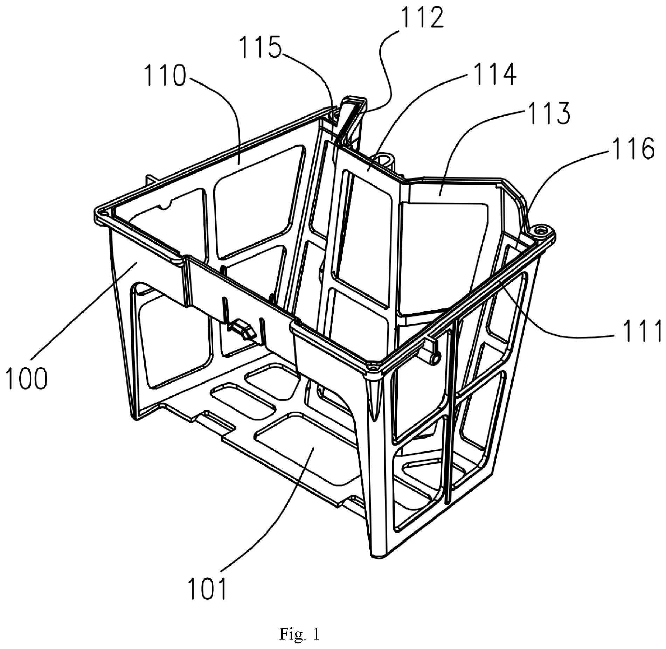

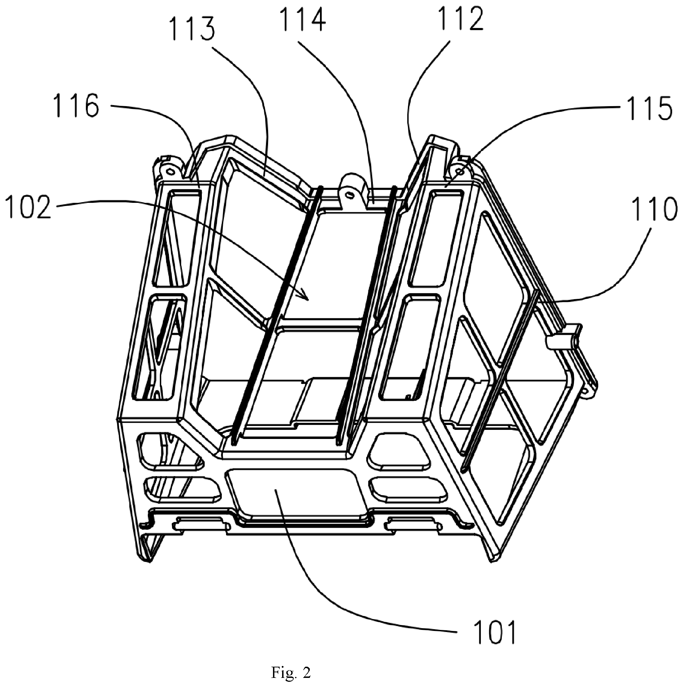

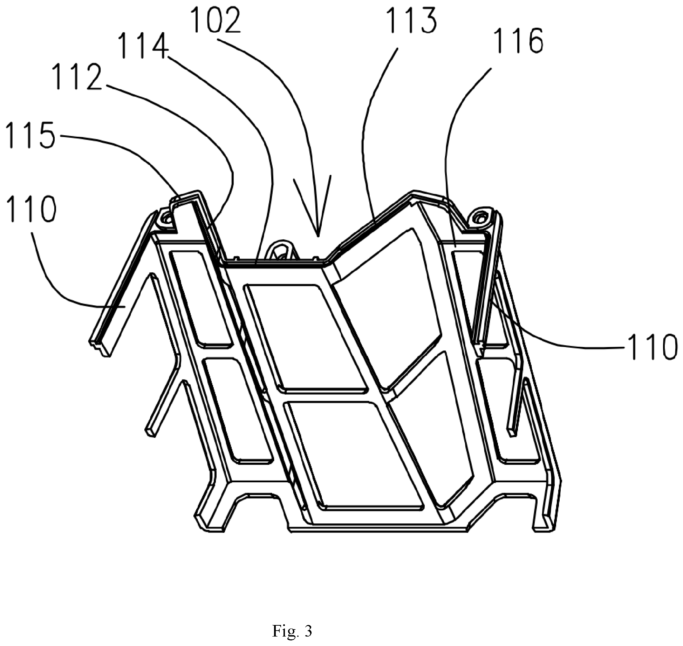

As shown in Figs. 1 to 3, this embodiment provides a filtering device 100 for an underwater robot (hereinafter referred to as "filtering device body," "filtering device," or "body"). The filtering device 100 includes a filtering device 100 body, wherein a bottom of the filtering device 100 body is provided with a water inlet 101; a side portion of the filtering device 100 body is provided with a plurality of filter holes; a hollow cavity is defined in the filtering device 100 body; the side portion of the filtering device 100 body is made up of at least three interconnected side walls arranged to surround the filtering device 100 body; and at least one of the side walls is a contoured side wall. The contoured side wall or curved side wall is curved or inclined both longitudinally and laterally, such that the contoured side wall is configured to define a second filter chamber 102 toward the hollow cavity of the filtering device 100 body or toward an outer side of the filtering device 100 body. A first side wall 110 of the filtering device 100 body is connected to a left side of the contoured side wall; and a second side wall 111 of the filtering device 100 body is connected to a right side of the contoured side wall.

In the filtering device 100 for an underwater robot of this embodiment, a top cover may be provided above the filtering device 100, or the top cover may be omitted. When the filtering device 100 is provided with the top cover, the top cover, the side walls, and a bottom wall together form an enclosed cavity, such that debris is contained within the enclosed cavity. When the filtering device 100 is not provided with the top cover, after the filtering device 100 is installed in the underwater robot, a cover of the underwater robot contacts the upper portion of the side walls of the filtering device 100. Thus, the cover of the underwater robot, the side walls, and the bottom wall together form an enclosed cavity, allowing debris to be contained within the enclosed cavity and achieving the same effect.

The contoured side wall has an inner surface formed with uneven contours on the side portion. After water flows therethrough, different types of debris are carried to different regions for retention and collection, thereby achieving a classifying collection effect.

In one embodiment, the contoured side wall includes a first side lug 112 through which the first side wall 110 is connected to the left side of the contoured side wall, and a second side lug 113 through which the second side wall 111 is connected to the right side of the contoured side wall, a filtering wall 114 is disposed between the first side lug 112 and the second side lug 113, and each of the filtering wall 114, the first side lug 112, and the second side lug 113 is provided with a filter opening. The first side lug 112 and the second side lug 113 primarily serve to form different side surfaces. However, in this embodiment, no specific requirements are imposed on the inclination angle, length, orientation, etc., of the first side lug 112 and the second side lug 113, and the first side lug 112 and the second side lug 113 should be arranged as described to achieve the effects of the present disclosure.

The first side lug 112 and the second side lug 113 are arranged to be inclined inwardly toward the filtering device 100 body or outwardly away from the filtering device 100 body, such that different vertical regions are present on the side surfaces thereof. The distance of water flow, the contact area, and other factors all affect the flow velocity of the water, so that debris is carried to different regions for retention.

In one embodiment, the filtering wall 114, the first side lug 112, and the second side lug 113 are interconnected to form a U-shaped structure having an upper width greater than a lower width or a lower width greater than an upper width, or the filtering wall 114, the first side lug 112, and the second side lug 113 are interconnected to form a wedge shape. The connecting portion of the U-shaped structure may be formed as a square corner or a rounded corner. When formed as a square corner, the U-shaped structure substantially exhibits a 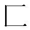 -shaped cross-section. In this embodiment, in addition to the U-shape and the 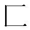 -shape, the shape may be adjusted according to actual application scenarios and practical requirements, and this embodiment is not intended to be exhaustive.

In one embodiment, a projection or a cross-section of the filtering wall 114 is parallel to an edge of the water inlet 101. The parallel arrangement allows water entering through the water inlet 101 to reach all regions smoothly without being obstructed midway.

In one embodiment, a first connecting wall 115 is further provided between the first side wall 110 and the first side lug 112, and a second connecting wall 116 is further provided between the second side wall 111 and the second side lug 113.

When the body of the filtering device 100 for an underwater robot is too large, the distance between the first side lug 112 and the second side lug 113 may be relatively long if they are provided directly. In such a case, the addition of the first connecting wall 115 and the second connecting wall 116 optimizes the structure and enhances the effect.

In one embodiment, the filter openings or the filter holes are provided with a filter substance (not shown in the figures). The filter substance is one or combination of a filter mesh, a filter cotton, a filter paper, a filter bag, an activated carbon filter layer, and a particle filter layer.

In this embodiment, when the filter openings or the filter holes are provided with the filter substance, first, a filter mesh is provided on each of the filter openings or each of the filter holes. The filter mesh may be a fibrous filter mesh or a metal (e.g., stainless steel) filter mesh. To prevent clogging, the mesh size of the filter mesh may be set relatively large. Then, a layer of filter cotton is provided on the inner side or the outer side of the filter mesh. In this embodiment, the filter mesh and the filter cotton together form the filter substance.

In this embodiment, the pore size of the filter cotton is smaller than that of the filter mesh, allowing finer debris to be filtered. During use, the filter mesh and the filter cotton may be used together or separately. When used separately, the filter cotton may be removed first, and only the filtering device 100 for an underwater robot is used for cleaning. At that time, coarse debris such as small stones, dead twigs, and coarse particles deposited at the bottom of the pool is collected in the body of the filtering device 100; when such debris floats to the water surface, floating substances such as leaves, plastic bags, and fruit peels can also be cleaned simultaneously, thereby achieving a coarse filtration effect. After a first round of cleaning of the pool bottom and/or the pool water surface, the filter cotton is reinstalled for further cleaning. At that time, suspended matter, flocculent matter, fine particulate dust, and the like in the pool water are adsorbed onto the filter cotton. After the cleaning is completed, the filter cotton is removed and cleaned. This operates on a principle similar to that of a filter device for an aquarium, with the disadvantage that the filter cotton needs to be cleaned or replaced after each cleaning operation.

In this embodiment, filter meshes of different mesh sizes may be provided on the first side wall 110, the first side lug 112, the connecting walls, the second side lug 113, and the second side wall 111. Thus, different types of debris can be collected in different regions, and the resulting clogging issues are also avoided. For example, when filter meshes with a relatively large mesh count are provided on the first side wall 110, the first side lug 112, the second side lug 113, and the second side wall 111, fine particulate matter, flocculent matter, and the like will be collected at the first side wall 110, the first side lug 112, the second side lug 113, and the second side wall 111. When a filter mesh with a relatively small mesh count is provided on the filtering wall 114, even if the first side wall 110, the first side lug 112, the second side lug 113, and the second side wall 111 become clogged, water can still pass through the filtering wall 114, and the collection of debris at the first side wall 110, the first side lug 112, the second side lug 113, and the second side wall 111 is not affected.

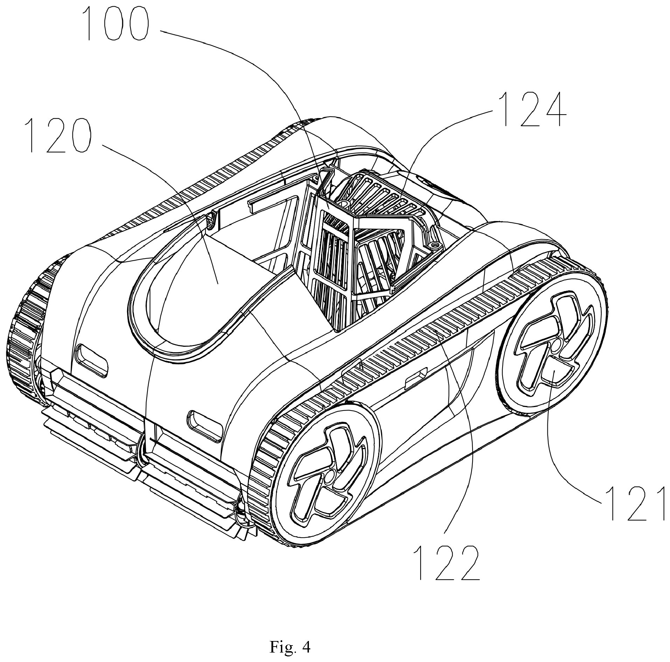

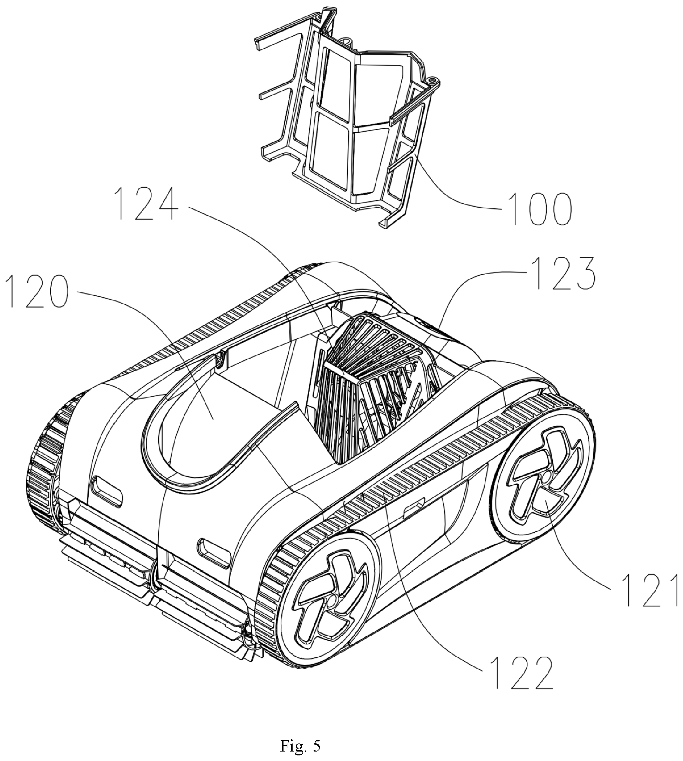

As shown in Figs. 4 and 5, when the filtering device for an underwater robot of this embodiment is applied to an underwater robot 120, the underwater robot 120 includes an underwater robot body (hereinafter referred to as "body" or "underwater robot"). A bottom of the underwater robot 120 body is provided with a debris inlet, and a side portion or/and an upper portion of the underwater robot 120 body is provided with a water outlet 123. The cleaning principle of the underwater robot 120 is as follows: waste water is drawn in through the debris inlet at the bottom, and after debris is collected by the filtering device 100 for an underwater robot, water is discharged through the water outlet 123, thereby achieving the cleaning purpose.

The lower portion of the underwater robot 120 is provided with a walking mechanism. The walking mechanism includes walking wheels 121 or/and walking tracks 122. In the underwater robot provided in this embodiment, both walking wheels 121 and synchronous walking tracks 122 are provided on both sides of the lower portion thereof.

The walking tracks 122 may be provided with a separate drive mechanism, or may rotate together with the walking wheels 121 as a transmission track of the walking wheels 121.

The filtering device 100 for an underwater robot is disposed inside the underwater robot 120 body and on a water flow passage between the debris inlet and the water outlet 123, and the debris inlet is in communication with the water inlet 101.

In one embodiment, a second filtering device 124 is further provided on or inside the underwater robot body. The second filtering device 124 is disposed between the filtering device for an underwater robot and the water outlet 123, and is configured to perform secondary filtration on the pool water that has been filtered by the filtering device for an underwater robot, thereby achieving a further cleaning effect.

In one embodiment, the second filtering device 124 is provided with a suction wall. The suction wall has a contour corresponding to the contoured side wall of the filtering device body, and the suction wall and the contoured side wall are arranged to fit with each other. Specifically, the outer surface of the suction wall fits with the outer surface of the contoured side wall of the filtering device body. The effect of such fitting is that water flowing out of the filtering device for an underwater robot immediately enters the second filtering device 124, reducing accumulation of debris in other structures inside the underwater robot 120. Alternatively, the second filtering device 124 is disposed at least partially in the second filter chamber 102.

In one embodiment, the second filtering device 124 is provided with a second filter substance. The second filter substance is one or combination of a filter mesh, a filter cotton, a filter paper, a filter bag, an activated carbon filter layer, and a particle filter layer.

Furthermore, the filtration density of the second filter substance is higher than that of the filter substance provided on the filter openings or the filter holes, so as to further filter out even finer particulate matter.

In one embodiment, the second filtering device 124 is removably disposed on the body of the underwater robot 120. When the second filtering device 124 becomes dirty, the second filtering device 124 can be directly removed and cleaned, making the structure more flexible and easier to use. The removal methods in this embodiment include commonly known fastening methods, adhesive methods, magnetic attraction methods, etc., all of which can achieve the corresponding removal and use effects. Therefore, the removal methods are not exhaustively listed or described in further detail in this embodiment.

Compared with the prior art, the present disclosure provides the following beneficial effects.

This embodiment provides a filtering device for an underwater robot and an underwater robot, which have a simple structure, are easy to use, are capable of collecting different types of debris, and a filtering effect thereof is further improved through a multi-layered filtering structure.

It is apparent that the above-described embodiments of the present disclosure are merely examples for clearly illustrating the technical solution of the present disclosure, and are not intended to limit the specific embodiments of the present disclosure. Any modifications, equivalent substitutions, improvements, or the like made within the spirit and principle of the claims of the present disclosure shall be included within the protection scope of the claims of the present disclosure.

## Claims

1. A filtering device for an underwater robot, comprising a filtering device body, wherein a bottom of the filtering device body is provided with a water inlet, a side portion of the filtering device body is provided with a plurality of filter holes, a hollow cavity is defined in the filtering device body, the side portion of the filtering device body is made up of at least three interconnected side walls arranged to surround the filtering device body, at least one of the side walls is a contoured side wall, and the contoured side wall is configured to define a second filter chamber toward the hollow cavity of the filtering device body or toward an outer side of the filtering device body, a first side wall of the filtering device body is connected to a left side of the contoured side wall, and a second side wall of the filtering device body is connected to a right side of the contoured side wall.

2. The filtering device for an underwater robot according to claim 1, wherein the contoured side wall comprises a first side lug through which the first side wall is connected to the left side of the contoured side wall, a second side lug through which the second side wall is connected to the right side of the contoured side wall, and a filtering wall disposed between the first side lug and the second side lug, and each of the filtering wall, the first side lug, and the second side lug is provided with a filter opening.

3. The filtering device for an underwater robot according to claim 1, wherein the filtering wall, the first side lug, and the second side lug are interconnected to form a U-shaped structure having an upper width greater than a lower width or a lower width greater than an upper width, or the filtering wall, the first side lug, and the second side lug are interconnected to form a wedge shape.

4. The filtering device for an underwater robot according to claim 2 or 3, wherein a projection of the filtering wall is parallel to an edge of the water inlet.

5. The filtering device for an underwater robot according to claim 2, wherein a first connecting wall is further provided between the first side wall and the first side lug, and a second connecting wall is further provided between the second side wall and the second side lug.

6. The filtering device for an underwater robot according to claim 1 or 2, wherein the filter openings or the filter holes are provided with a filter substance, and the filter substance is one or combination of a filter mesh, a filter cotton, a filter paper, a filter bag, an activated carbon filter layer, and a particle filter layer.

7. An underwater robot, comprising an underwater robot body, wherein a bottom of the underwater robot body is provided with a debris inlet, and a side portion or an upper portion of the underwater robot body is provided with a water outlet;
a walking mechanism is disposed at a lower portion of the underwater robot, and the walking mechanism is walking wheels or walking tracks; and
wherein the underwater robot further comprises the filtering device for an underwater robot according to any one of claims 1 to 6, the filtering device for an underwater robot is disposed inside the underwater robot body and on a water flow passage between the debris inlet and the water outlet, and the debris inlet is in communication with the water inlet.

8. The underwater robot according to claim 7, wherein the underwater robot body is further provided with a second filtering device, and the second filtering device is disposed between the filtering device for an underwater robot and the water outlet.

9. The underwater robot according to claim 8, wherein the second filtering device is provided with a suction wall, the suction wall has a contour corresponding to the contoured side wall of the filtering device body, and the suction wall and the contoured side wall are arranged to fit with each other.

10. The underwater robot according to claim 8 or 9, wherein the second filtering device is provided with a second filter substance, and the second filter substance is one or combination of a filter mesh, a filter cotton, a filter paper, a filter bag, an activated carbon filter layer, and a particle filter layer.
